# EUROPEAN PATENT APPLICATION

(11) **EP 2 674 576 A1**
(43) Date of publication of application: **18.12.2013**
(21) Application number: 13154245.8
(22) Date of filing: 06.02.2013
(51) Int. Cl.: F01D 5/28, F01D 11/12, C23C 28/00, B32B 5/02, B32B 5/26, B32B 33/00, B32B 38/08, D03D 9/00

(54) **Reinforced Coatings and Methods of Making the Same**

(30) Priority: 09.02.2012 US 201213369885
(71) Applicant: General Electric Company, Schenectady, New York 12345 (US)
(72) Inventor: Zhang, James, Greenville, SC South Carolina 29615 (US); De Diego, Peter, Greenville, SC South Carolina 29615 (US); Delvaux, John McConnell, Greenville, SC South Carolina 29615 (US)
(74) Representative: Szary, Anne Catherine

(57) **Abstract**

A reinforced coating (100) for a substrate (102) includes a bond coat layer (104) bonded to a surface of the substrate (102); an intermediate layer (106) bonded to the bond coat layer (104); a reinforced layer (108) bonded to the intermediate layer (106), wherein the reinforced layer (108) comprises a woven fiber mesh (110) disposed in the reinforced layer (108) in a substantially planar position.

## Description

### BACKGROUND OF THE INVENTION

The subject matter disclosed herein relates to reinforced coatings and, more particularly, to a reinforced barrier coating for protecting a substrate.

The components of high-temperature mechanical systems, such as, for example, gas turbine engines, must operate in severe environments. The components of such high-temperature mechanical systems can include a Ni or Co-based superalloy substrate. Typically, the substrate can be coated with a thermal barrier coating (TBC) to reduce surface temperatures. The thermal barrier coating may include a thermally insulative ceramic topcoat, and is bonded to the substrate by an underlying metallic bond coat.

However, the desire for improved efficiency and reduced emissions continue to drive the development of advanced gas turbine engines with higher inlet temperatures. In some cases, this may lead to the replacement of the superalloy substrate with a silicon-based ceramic or ceramic matrix composite (CMC) substrate. Silicon-based ceramics or CMCs possess excellent high temperature mechanical, physical and chemical properties, which allow gas turbine engines to operate at higher temperatures than gas-turbine engines having superalloy components. As such, they may not need a conventional TBC. However, these substrates can suffer from rapid recession in combustion environments due to the volatilization of silica by water vapor. Thus, silicon-based ceramic and CMC substrates may be coated by an environmental barrier coating (EBC), which protects the substrate from water vapor attack. Additionally, the EBC may thermally insulate the substrate, and an additional TBC may be provided over the EBC to further thermally insulate the silicon-based ceramic or CMC substrate.

The coatings, while resistant to recession from water vapor and/or extreme temperatures, can still be prone to damage by impact of a foreign object, such as combustion debris. Damage that causes cracks to initiate in the coating can propagate down to the interface between the component substrate and the coating. This can generally lead to coating spallation and a loss of protection to the component substrate.

Accordingly, it is desirable to provide a barrier coating, such as an environmental or thermal coating, that is also resistant to impact damage, crack propagation, coating spallation, and the like.

### BRIEF DESCRIPTION OF THE INVENTION

According to one aspect of the invention, a reinforced coating for a substrate includes a bond coat layer bonded to a surface of the substrate; an intermediate layer bonded to the bond coat layer; a reinforced layer bonded to the intermediate layer, wherein the reinforced layer comprises a woven fiber mesh disposed in the reinforced layer in a substantially planar position.

According to another aspect of the invention, a component for a gas turbine engine includes a substrate material having an outer surface; a reinforced coating bonded to at least a portion of the outer surface, wherein the reinforced coating includes a bond coat layer bonded to a surface of the substrate; an intermediate layer bonded to the bond coat layer; a reinforced layer bonded to the intermediate layer, wherein the reinforced layer comprises a woven fiber mesh disposed in the reinforced layer in a substantially planar position.

According to yet another aspect of the invention, a method of forming a reinforced coating on a substrate includes bonding a bond coat layer onto a surface of the substrate; bonding an intermediate layer to the bond coat layer; disposing a woven fiber mesh in a substantially planar position on a surface of the intermediate layer; and depositing a reinforced coating material onto the intermediate layer so as to form a reinforced layer wherein the woven fiber mesh is embedded therein.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic cross-sectional view of one embodiment of a reinforced coating in accordance with the description herein;
FIG. 2 is a schematic cross-sectional view of a conventional barrier coating damaged by impact from a foreign object;
FIG. 3 is a schematic cross-sectional view of one embodiment of a reinforced coating in accordance with the description herein damaged by impact from a foreign object similar to FIG. 2; and
FIG. 4 is a schematic top-down view of one embodiment of a reinforced coating in accordance with the description herein.

The detailed description explains embodiments of the invention, together with advantages and features, by way of example with reference to the drawings.

### DETAILED DESCRIPTION OF THE INVENTION

Disclosed herein are reinforced coatings and methods of making the reinforced coatings. More particularly, disclosed herein are reinforced barrier coatings, such as environmental barrier coatings (EBC) or thermal barrier coatings (TBC) for protecting a superalloy substrate or a ceramic matrix composite (CMC) substrate, respectively. The reinforced barrier coatings described herein are configured to provide improved impact resistance compared to conventional EBCs and TBCs without the reinforcement described herein. The reinforced coatings can be useful to improve the impact resistance of any protective coating disposed on a substrate, and they are particularly useful as EBCs or TBCs. As such, for ease in discussion, it is to be understood that the reinforced coatings can be applicable to any substrate that will benefit from improved impact resistance compared to a substrate with no coating or having a conventional protective coatings, such as typical EBCs and TBCs.

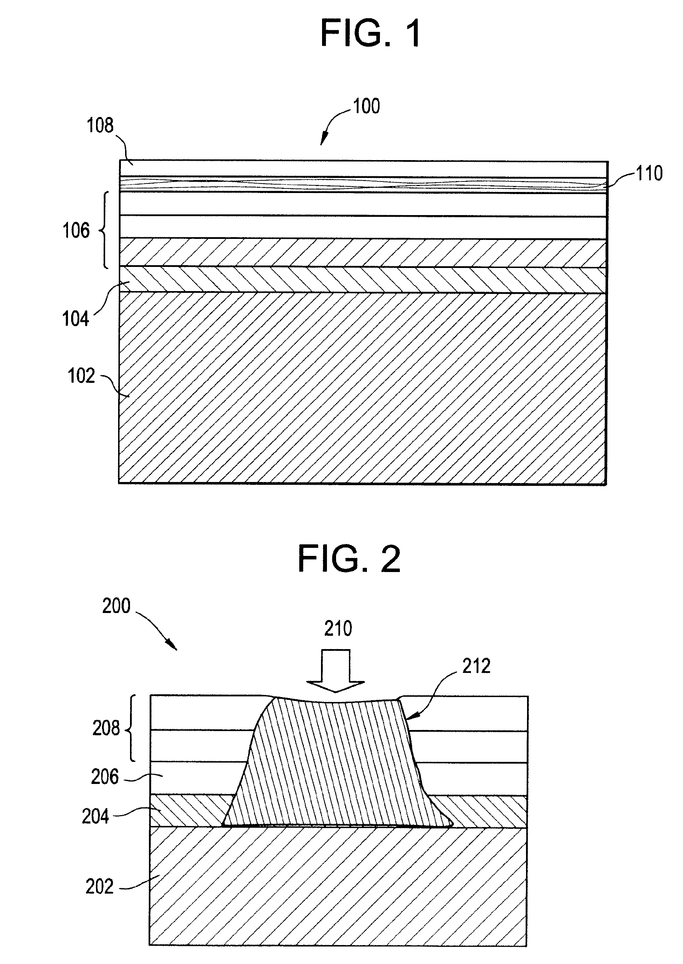

FIG. 1 schematically illustrates the cross-sectional view of an exemplary embodiment of a reinforced coating 100. The reinforced coating 100 comprises five layers disposed on a substrate 102. In another embodiment, the reinforced coating can include more or less layers. For example, the reinforced coating 100 could include, without limitation, between about 2 and about 10 layers; specifically about 3 to about 7 layers. A bond coat layer 104 is disposed on the substrate 102. An intermediate layer 106 is disposed over the bond coat layer 104. In this embodiment, the intermediate layer 106 includes three distinct layers, which may be the same or different. In another embodiment, the intermediate layer 106 can comprise more or less layers. A reinforced layer 108 is disposed over the intermediate layer 106. In another embodiment, the reinforced coating 100 can include two reinforced layers, a first reinforced layer disposed on the intermediate layer and a second reinforced layer disposed on the first reinforced layer. The two reinforced layers can be the same or different. It is this outermost reinforced layer (or layers) 108 that provides an amount of impact resistance to the reinforced coating 100. The reinforced layer 108 includes a plurality of woven fibers 110 embedded within the material of the reinforced layer to increase the impact resistance of the coating and substantially deviate crack propagation.

Turning for a moment to FIG. 2, a current coating 200, such as a conventional EBC, is shown disposed on a substrate 202. The coating 200 includes four layers, the first of which is a bond coat layer 204 in contact with the substrate 202. An intermediate layer 206 is disposed on the bond coat layer 204, and two recession resistant layers 208 are disposed on the intermediate layer 206. The top recession resistant layers of conventional EBCs tend to be stiff and brittle in nature. As such, they are prone to transfer the kinetic energy of an impact to the layers beneath when they are hit by high-velocity foreign objects. The direction of impact to the coating 200 is illustrated by the arrow 210; substantially perpendicular to the coating surface. The zone of damage by the impact is shown in area 212. As can be seen, the damage zone traveled from the initial impact on the stiff and brittle recession resistant layers 208 down through each layer in the coating beneath the layers 208. As the crack propagated through the coating 200 it also radiated outward, such that the width of damage in the horizontal and vertical directions became greater as the damage traveled from the point of initial impact down through the coating toward the substrate 202. If the impact results in chipping off of portions of the coating or coating spallation, the substrate can be exposed to the harsh environment, thereby shortening the life of the component.

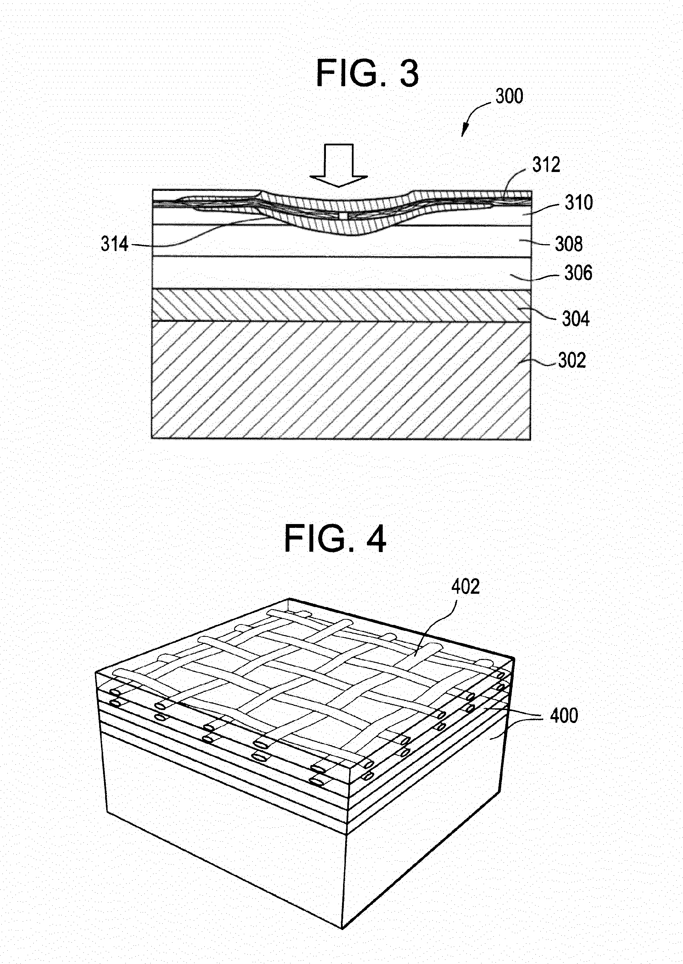

By comparison, FIG. 3 illustrates an exemplary embodiment of a reinforced coating 300 disposed on a substrate 302. The reinforced coating 300 includes four layers, the first of which is a bond coat layer 304 in contact with the substrate 302. An intermediate layer 306 is disposed on the bond coat layer 304 and a recession resistant layer 308 is disposed on the intermediate layer 306. A reinforced layer 310 is disposed on the recession resistant layer 308. In another embodiment, the coating can include two reinforced layers wherein the recession resistant layer 308 is also reinforced as described herein. The reinforced layer 310 includes a woven mesh 312 embedded in the coating material, wherein the material can be, for example, a recession resistant material. As will be described in more detail below, the woven mesh 312 reinforces the outer most layer or layers of the reinforced coating 300. The woven mesh 312 can be formed of fibers having better oxidation resistance and mechanical strength retention in high temperatures (e.g., about 2400 degrees Fahrenheit (°F) or more) than the coating material itself, thereby providing a backbone to the reinforced coating 300, which doesn't exist in conventional barrier coatings. The reinforced woven fibers increase the impact resistance of the coating. As illustrated in FIG. 3, when an impact occurs, such as from combustion debris, the kinetic energy of the impact is absorbed by both the coating material of the reinforced layer 310 and the woven mesh 312, as illustrated by the area designated 314. Absorption of this energy can cause, in some instances, cracking of the reinforced layer matrix, fiber breakage in the woven mesh 312, or fiber/matrix interface debonding. However, the cracks will not penetrate through all the layers of the reinforced coating 300; instead they are deviated in a substantially horizontal direction along the length of the woven mesh fibers. In this regard, the substrate remains coated and will continue to be protected by the undamaged layers of the reinforced coating. The reinforced layer(s) is essentially effective in dissipating the kinetic energy of the impact and preventing it from substantially deviating into the internal layers of the coating, thereby better maintaining the integrity of the coating.

Returning now to FIG. 1, the reinforced coating 100 is considered in more detail. The reinforced layer 108 is the outer most layer of the reinforced coating 100 and is configured to provide the coating with improved mechanical strength and impact resistance over conventional coatings without a reinforced layer or layers. The reinforced layer 108 includes a plurality of fibers 110. The plurality of fibers 110 are disposed within the material of the reinforced layer 108 and the combination of the fibers and coating material form a matrix. The fibers are formed of materials having better oxidation and ability to retain mechanical strength in high temperature environments. Exemplary fibers for use in the reinforced layer can include, without limitation, single oxides, carbides, nitrides, intermetallics, or combinations thereof, and the like. Exemplary oxides can include, without limitation, alumina, zirconia, titania, magnesium oxide, mullite, spinel, and the like. Exemplary carbides can include, without limitation, silicon carbide, boron carbide, titanium carbide, and the like. Exemplary nitrides can include, without limitation, silicon nitride, boron nitride, and the like. Exemplary intermetallics can include, without limitation, nickel aluminide, titanium aluminide, molybdenum disilicide, and the like. Typically, the polycrystalline oxide fibers of, for example, alumina, mullite, yttrium aluminum garnet, and the like have high melting points and retain mechanical strength below about 2400 °F, but single crystal forms of these fibers show superior creep resistance above 2400 °F. This is desirable for barrier coatings, such as EBCs and TBCs, particularly for use in engine applications, such as gas turbine engines.

The fibers can have a diameter sufficiently small so as to be easily embedded into one or more of the reinforced layers. In one embodiment, each fiber of the plurality of fibers 110 can have a diameter of about 3 micrometers to about 10 micrometers. In certain embodiments, the fibers can first be bundled before incorporation into the reinforced layer 108. Bundles of the fibers can have a diameter of about 15 micrometers to about 50 micrometers. The plurality of fibers in the reinforced layer 108 are woven to form a reinforced mesh in the layer. The fibers can be woven into a plain weave, a satin weave, a twill weave, or a combination thereof. An exemplary embodiment of a woven fiber mesh 400 is illustrated in FIG. 4. In FIG. 4, a top-down view of a reinforced layer 402 is illustrated with the woven fiber mesh 400 embedded therein. The woven fiber mesh 400 is embedded within the reinforced layer 402 in a substantially planar position. The woven design of the fiber bundles, along with its substantially planar positioning within the reinforced layer advantageously provides horizontal mitigation to impacts thereon and substantially reduces damage to the layers disposed beneath the reinforced layer or layers, thereby improving the operating life of the overall coating. The woven fiber mesh and the reinforced layer coating material further bond at the interfaces to form a matrix and this interfacial bonding further improves the impact resistance of the reinforced coating.

The reinforced layer coating material can be any material configured to provide oxidation and/or thermal resistance in a high temperature environment, as well as provide a certain level of mechanical integrity to the coating. The reinforced layer coating material must also be compatible with the woven fiber mesh, such that the two are chemically inert and the woven fiber mesh can be embedded therein. In one embodiment, the reinforced layer 108 can include a coating material having at least one rare earth (RE) silicate including, but not limited to, Y, Dy, Ho, Er, Tm, Th, Yb and/or Lu, having a general composition of RE₂SiO₅. The coating material of the reinforced layer 108 is chemically compatible with any underlying layers, such as the intermediate layer, or the bond coat layer in cases where no intermediate layer is present. In an exemplary embodiment, the coating material of the reinforced layer 108 has a high recession resistance. For example, the reinforced layer 108 may include Y₂SiO₅ applied to or deposited on the intermediate layer 106 containing a Y₂Si₂O₇ outer surface. It is apparent to those skilled in the art and guided by the teachings herein provided that reinforced layers, recession resistance layers, and any other intermediate layers there between can include any suitable material including one or more rare earth metals.

In one embodiment, the woven fiber mesh can be laid on the top or outer-most layer of the reinforced coating, in this case the intermediate layer 106. The reinforced coating material can then be applied uniformly to or deposited uniformly onto the intermediate layer 106, thereby coating the woven wire mesh and embedding it therein. The reinforced layer 108 can have a thickness of about 0.5 mil to about 2.0 mil. For example, in one embodiment, a reinforced layer has a thickness less than about 0.001 inch (25 micrometers). While the embodiment of FIG. 1 illustrates one reinforced layer 108, it is to be understood that a reinforced coating as described herein can also have two reinforced layers, so long as both layers are the two outer-most layers of the reinforced coating. In other words, the two reinforced layers are the two layers furthest from the substrate.

The reinforced coating 100 further includes a bond coat layer 104 disposed on the surface of the substrate 102. The bond coat layer is bonded to or deposited on the substrate. The bond coat layer 104 is configured to provide a bonding surface for the rest of the layers in the reinforced coating 100 and improve adhesion between the reinforced layer(s), optional additional intermediate layers, and the substrate. In some embodiments, substrate 102 may include a superalloy, and bond coat layer 104 can include an alloy, such as a conventional MCrAlY alloy (where M is Ni, Co, or NiCo), a β-NiAl nickel aluminide alloy (either unmodified or modified by Pt, Cr, Hf, Zr, Y, Si, and combinations thereof), a γ-Ni+γ'-Ni₃Al nickel aluminide alloy (either unmodified or modified by Pt, Cr, Hf, Zr, Y, Si, and combinations thereof), or the like. In other embodiments, bond coat layer 104 can include ceramics or other materials that are compatible with a substrate 102 including a ceramic or CMC. For example, bond coat layer 104 can include mullite, silica, silicides, silicon, or the like. Bond coat layer 104 could further include other ceramics, such as rare earth silicates including lutetium silicates, ytterbium silicates, thulium silicates, erbium silicates, holmium silicates, dysprosium silicates, terbium silicates, gadolinium silicates, europium silicates, samarium silicate, promethium silicates, neodymium silicates, praseodymium silicates, cerium silicates, lanthanum silicates, yttrium silicates, scandium silicates, or the like. In some embodiments, bond coat 104 may include multiple layers.

The reinforced coating 100 also includes the intermediate layers 106 disposed between the bond coat layer 104 and the reinforced layer(s) 108. In the embodiment of FIG. 1, the intermediate layer 106 includes three distinct layers. In other embodiments, the intermediate layer 106 can have more or less distinct layers therein as may be desirable for a particular type of coating, such as a TBC or EBC. In one embodiment, the intermediate layer 106 includes at least one layer formed from at least one RE silicate including, but not limited to, Y, Dy, Ho, Er, Tm, Tb, Yb and/or Lu, having a general composition of RE₂Si₂O₇. For example, a first intermediate layer 106 (e.g. intermediate layer closest to the substrate) includes RE₂Si₂O₇. Additionally, the intermediate layer includes a second or outer intermediate layer positioned between first intermediate layer and the reinforced layer 108. Again, although the intermediate layer 106 is shown having three distinct layers, it is apparent to those skilled in the art and guided by the teachings herein provided that intermediate layer 106 can include any suitable number of layers. In one embodiment, the layers have a combined thickness of about 3.0 mil to about 10.0 mil. In addition to the at least one rare earth silicate, or alternatively, intermediate layer 106 can include at least one suitable material layer and/or each intermediate layer can include at least one suitable material. In certain embodiments, the intermediate layer 106 can include a moisture barrier layer, reaction barrier layer, and the like.

In certain embodiments, a protective layer (not shown) can be disposed over the intermediate layer 106 or the reinforced layer 108. The optional protective layer can have a general composition of RE₂SiO₅. In a particular embodiment, protective layer can be bonded to the intermediate layer by a reaction of a metal-oxide precursor material with the intermediate layer. For example, the protective layer including RE₂SiO₅ is formed by reacting a metal-oxide precursor material including RE₂O₃ with the intermediate layer including RE₂Si₂O₇. In one embodiment, a surface layer (not shown) can be further bonded to the protective layer. The surface layer can include at least one RE and has a ratio of RE to oxygen of at least 2:3.

As mentioned previously, the reinforced layer or layers can be made by forming a woven fiber mesh from individual or bundles of fibers. The woven fiber mesh can be placed over the intermediate layer and bond coat layer, which have been already deposited on the substrate. The reinforced coating material can then be deposited, such as by plasma spraying, onto the woven fiber mesh, so that the mesh is embedded into the material and forms a substantially planar layer of mesh throughout the dimensions of the reinforced layer. If a second reinforced layer is desired, the process can be repeated after formation of the first reinforced layer. Any of the layers present in the reinforced coating described herein can be made using conventional methods known to those skilled in the art. More particularly, and regardless of the particular architecture of the barrier coating, the substrate component can be coated using conventional methods known to those skilled in the art, including, but not limited to, plasma spraying, high velocity plasma spraying, low pressure plasma spraying, solution plasma spraying, suspension plasma spraying, chemical vapor deposition (CVD), electron beam physical vapor deposition (EBPVD), sol-gel, sputtering, slurry processes such as dipping, spraying, tape-casting, rolling, and painting, and combinations of these methods. Once coated, the substrate component may be dried and sintered using either conventional methods, or unconventional methods such as microwave sintering, laser sintering or infrared sintering.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A reinforced coating for a substrate, comprising:
a bond coat layer bonded to a surface of the substrate;
an intermediate layer bonded to the bond coat layer;
a reinforced layer bonded to the intermediate layer, wherein the reinforced layer comprises a woven fiber mesh disposed in the reinforced layer in a substantially planar position.

2. The reinforced coating of claim 1, further comprising an additional reinforced layer bonded to the reinforced layer, wherein the additional reinforced layer comprises an additional woven fiber mesh disposed in the additional reinforced layer in a substantially planar position.

3. The reinforced coating of claim 1 or claim 2, wherein the intermediate layer comprises two more discrete layers.

4. The reinforced coating of any preceding claim, wherein the woven fiber mesh comprises a plurality of individual fibers formed into a plain weave, a satin weave or a twill weave.

5. The reinforced coating of claim 4, wherein each of the plurality of individual fibers have a diameter of about 3 micrometers to about 10 micrometers.

6. The reinforced coating of any preceding claim, wherein the woven fiber mesh comprises a plurality of fiber bundles.

7. The reinforced coating of claim 6, wherein each fiber bundle of the plurality of fiber bundles has a diameter of about 15 micrometers to about 50 micrometers.

8. The reinforced coating of any preceding claim, wherein the woven fiber mesh comprises a plurality of fibers of a material selected from the group consisting of alumina, zirconia, titania, magmesium oxide, mullite, spinel, silicon carbide, boron carbide, titanium carbide, silicon nitride, boron nitride, nickel aluminide, titanium aluminide, and molybdenum disilicide.

9. The reinforced coating of any preceding claim, wherein the reinforced layer further comprises a material having a general composition of RE₂SiO₅, wherein the material and the woven fiber mesh are bonded to form a matrix.

10. The reinforced coating of any preceding claim, wherein the intermediate layer comprises a material having a general composition of RE₂Si₂O₇.

11. A method of forming a reinforced coating on a substrate, comprising:
bonding a bond coat layer onto a surface of the substrate;
bonding an intermediate layer to the bond coat layer;
disposing a woven fiber mesh in a substantially planar position on a surface of the intermediate layer; and
depositing a reinforced coating material onto the intermediate layer so as to form a reinforced layer wherein the woven fiber mesh is embedded therein.

12. The method of claim 11, further comprising weaving a plurality of individual fibers to form the woven fiber mesh or weaving a plurality of fiber bundles to form the woven fiber mesh.

13. The method of claim 11 or claim 12, wherein at least one of the bond coat layer, the intermediate layer and the reinforced layer were formed from the group consisting of plasma spraying, high velocity plasma spraying, low pressure plasma spraying, solution plasma spraying, suspension plasma spraying, chemical vapor deposition, electron beam physical vapor deposition, sol-gel, sputtering, dipping, spraying, tape-casting, rolling, and painting.

14. The method of any one of claims 11 to 13, further comprising disposing an additional woven fiber mesh in a substantially planar position on a surface of the reinforced layer; and depositing an additional reinforced coating material onto the reinforced layer so as to form an additional reinforced layer wherein the additional woven fiber mesh is embedded therein.

15. A component for a gas turbine engine, comprising:
a substrate material having an outer surface;
a reinforced coating bonded to at least a portion of the outer surface, wherein the reinforced coating comprises:
a bond coat layer bonded to the outer surface;
an intermediate layer bonded to the bond coat layer;
a reinforced layer bonded to the intermediate layer, wherein the reinforced layer comprises a woven fiber mesh disposed in the reinforced layer in a substantially planar position.
